(19) Europäisches Patentamt
European Patent Office
Office européen des brevets

(11) **EP 1 397 799 B1**

(12) **EUROPÄISCHE PATENTSCHRIFT**

(45) Veröffentlichungstag und Bekanntmachung des Hinweises auf die Patenterteilung:
**17.11.2004 Patentblatt 2004/47**

(21) Anmeldenummer: **02740659.4**

(22) Anmeldetag: **28.05.2002**

(51) Int Cl.⁷: **G10L 19/02**, G06F 17/14

(86) Internationale Anmeldenummer:
**PCT/EP2002/005865**

(87) Internationale Veröffentlichungsnummer:
**WO 2002/103684 (27.12.2002 Gazette 2002/52)**

(54) **VERFAHREN UND VORRICHTUNG ZUM VERARBEITEN VON ZEITDISKRETEN AUDIO-ABTASTWERTEN**

METHOD AND DEVICE FOR PROCESSING TIME-DISCRETE AUDIO SAMPLED VALUES

PROCEDE ET DISPOSITIF DE TRAITEMENT DE VALEURS D'ECHANTILLONNAGE AUDIO DISCRETES DANS LE TEMPS

(84) Benannte Vertragsstaaten:
**AT BE CH CY DE DK ES FI FR GB GR IE IT LI LU MC NL PT SE TR**

(30) Priorität: **18.06.2001 DE 10129240**

(43) Veröffentlichungstag der Anmeldung:
**17.03.2004 Patentblatt 2004/12**

(73) Patentinhaber: **Fraunhofer-Gesellschaft zur Förderung der angewandten Forschung e.V. 80636 München (DE)**

(72) Erfinder:
• **GEIGER, Ralf**
  **98693 Ilmenau (DE)**
• **SPORER, Thomas**
  **90766 Fürth (DE)**
• **KOLLER, Jürgen**
  **98704 Wümbach (DE)**
• **BRANDENBURG, Karlheinz**
  **91054 Erlangen (DE)**
• **HERRE, Jürgen**
  **91054 Buckenhof (DE)**

(74) Vertreter: **Schoppe, Fritz, Dipl.-Ing. Patentanwälte Schoppe, Zimmermann, Stöckeler & Zinkler, Postfach 246 82043 Pullach bei München (DE)**

(56) Entgegenhaltungen:
• **ZENG Y ET AL: "Integer sinusoidal transforms based on lifting factorization" 2001 IEEE INTERNATIONAL CONFERENCE ON ACOUSTICS, SPEECH, AND SIGNAL PROCESSING. PROCEEDINGS (CAT. NO.01CH37221), 7. - 11. Mai 2001, Seiten 1181-1184 vol.2, XP002210315 SALT LAKE CITY, UT, USA, Piscataway, NJ, USA, IEEE, USA ISBN: 0-7803-7041-4**
• **SOO-CHANG PEI ET AL: "The integer transforms analogous to discrete trigonometric transforms" IEEE TRANSACTIONS ON SIGNAL PROCESSING, DEC. 2000, IEEE, USA, Bd. 48, Nr. 12, Seiten 3345-3364, XP002210316 ISSN: 1053-587X**
• **GEIGER R., SPORER T., KOLLER J. AND BRANDENBURG K.: "Audio Coding based on Integer Transforms" 111TH CONVENTION OF THE AUDIO ENGINEERING SOCIETY, Nr. 5471, 21. - 24. September 2001, XP008006797 New York, NY, USA**

**Beschreibung**

Die vorliegende Erfindung bezieht sich auf die Audiocodierung und insbesondere auf Verfahren und Vorrichtungen zum Verarbeiten von zeitdiskreten Audio-Abtastwerten, um ganzzahlige Ausgangswerte zu erhalten.

Moderne Audiocodierverfahren, wie z. B. MPEG Layer3 (MP3) oder MPEG AAC verwenden Transformationen wie beispielsweise die sogenannte modifizierte diskrete Cosinustransformation (MDCT), um eine blockweise Frequenzdarstellung eines Audiosignals zu erhalten. Ein solcher Audiocodierer erhält üblicherweise einen Strom von zeitdiskreten Audio-Abtastwerten. Der Strom von Audio-Abtastwerten wird gefenstert, um einen gefensterten Block von beispielsweise 1024 oder 2048 gefensterten Audio-Abtastwerten zu erhalten. Zur Fensterung werden verschiedene Fensterfunktionen eingesetzt, wie z. B. ein Sinus-Fenster, etc.

Die gefensterten zeitdiskreten Audio-Abtastwerte werden dann mittels einer Filterbank in eine spektrale Darstellung umgesetzt. Prinzipiell kann hierzu eine Fourier-Transformation, oder aus speziellen Gründen eine Abart der Fourier-Transformation, wie z. B. eine FFT oder, wie es ausgeführt worden ist, eine MDCT eingesetzt werden. Der Block von Audio-Spektralwerten am Ausgang der Filterbank kann dann je nach Bedarf weiter verarbeitet werden. Bei den oben bezeichneten Audio-Codierern folgt eine Quantisierung der Audio-Spektralwerte, wobei die Quantisierungsstufen typischerweise so gewählt werden, daß das durch das Quantisieren eingeführt Quantisierungsrauschen unterhalb der psychoakustischen Maskierungsschwelle liegt, d. h. "wegmaskiert" wird. Die Quantisierung ist eine verlustbehaftete Codierung. Um eine weitere Datenmengenreduktion zu erhalten, werden die quantisierten Spektralwerte anschließend beispielsweise mittels einer Huffman-Codierung Entropie-codiert. Durch Hinzufügen von Seiteninformationen, wie z. B. Skalenfaktoren etc. wird aus den Entropie-codierten quantisierten Spektralwerten mittels eines Bitstrom-Multiplexers ein Bitstrom gebildet, der gespeichert oder übertragen werden kann. Ein Beispiel für einen bekannten Audio-Codierer wird in Peter Noll: "Wideband Speech and Audio Coding", IEEE Communications Magazine (U.S.A), 1993, Band 31, Seiten 34-44 offenbart.

Im Audio-Decodierer wird der Bitstrom mittels eines Bitstrom-Demultiplexers in codierte quantisierte Spektralwerte und Seiteninformationen aufgeteilt. Die Entropie-codierten quantisierten Spektralwerte werden zunächst Entropie-decodiert, um die quantisierten Spektralwerte zu erhalten. Die quantisierten Spektralwerte werden dann invers quantisiert, um decodierte Spektralwerte zu erhalten, die Quantisierungsrauschen aufweisen, das jedoch unterhalb der psychoakustischen Maskierungsschwelle liegt und daher unhörbar sein wird. Diese Spektralwerte werden dann mittels eines Synthese-Filterbank in eine zeitliche Darstellung umgesetzt, um zeitdiskrete decodierte Audio-Abtastwerte zu erhalten. In der Synthese-Filterbank muß ein zum Transformations-Algorithmus inverser Transformations-Algorithmus eingesetzt werden. Außerdem muß nach der Frequenz-Zeit-Rücktransformation das Fenstern rückgängig gemacht werden.

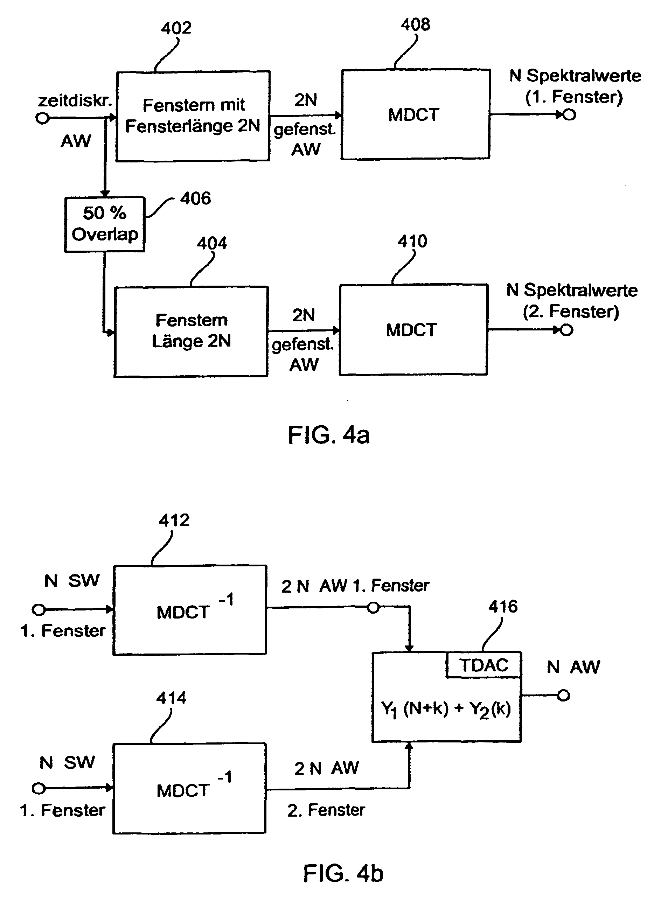

Um eine gute Frequenzselektivität zu erreichen, verwenden moderne Audio-Codierer typischerweise eine BlockÜberlappung. Ein solcher Fall ist in Fig. 4a dargestellt. Zunächst werden beispielsweise 2048 zeitdiskrete Audio-Abtastwerte genommen und mittels einer Einrichtung 402 gefenstert. Das Fenster, das die Einrichtung 402 verkörpert, hat eine Fensterlänge von 2N Abtastwerten und liefert ausgangsseitig einen Block von 2N gefensterten Abtastwerten. Um eine Fensterüberlappung zu erreichen, wird mittels einer Einrichtung 404, die lediglich aus Übersichtlichkeitsgründen in Fig. 4a getrennt von der Einrichtung 402 dargestellt ist, ein zweiter Block von 2N gefensterten Abtastwerten gebildet. Die in die Einrichtung 404 eingespeisten 2048 Abtastwerte sind jedoch nicht die an das erste Fenster unmittelbar anschließenden zeitdiskreten Audio-Abtastwerte, sondern beinhalten die zweite Hälfte der durch die Einrichtung 402 gefensterten Abtastwerte und beinhalten zusätzlich lediglich 1024 "neue" Abtastwerte. Die Überlappung ist durch eine Einrichtung 406 in Fig. 4a symbolisch dargestellt, die einen Überlappungsgrad von 50% bewirkt. Sowohl die durch die Einrichtung 402 ausgegebenen 2N gefensterten Abtastwerte als auch die durch die Einrichtung 404 ausgegebenen 2N gefensterten Abtastwerte werden dann mittels einer Einrichtung 408 bzw. 410 dem MDCT-Algorithmus unterzogen. Die Einrichtung 408 liefert gemäß dem bekannten MDCT-Algorithmus N Spektralwerte für das erste Fenster, während die Einrichtung 410 ebenfalls N Spektralwerte liefert, jedoch für das zweite Fenster, wobei zwischen dem ersten Fenster und dem zweiten Fenster eine Überlappung von 50% besteht.

Im Decodierer werden die N Spektralwerte des ersten Fensters, wie es in Fig. 4b gezeigt ist, einer Einrichtung 412, die eine inverse modifizierte diskrete Cosinustransformation durchführt, zugeführt. Dasselbe gilt für die N Spektralwerte des zweiten Fensters. Diese werden einer Einrichtung 414 zugeführt, die ebenfalls eine inverse modifizierte diskrete Cosinustransformation durchführt. Sowohl die Einrichtung 412 als auch die Einrichtung 414 liefern jeweils 2N Abtastwerte für das erste Fenster bzw. 2N Abtastwerte für das zweite Fenster.

In einer Einrichtung 416, die in Fig. 4b mit TDAC (TDAC = Time Domain Aliasing Cancellation) bezeichnet ist, wird die Tatsache berücksichtigt, daß die beiden Fenster überlappend sind. Insbesondere wird ein Abtastwert $y_1$ der zweiten Hälfte des ersten Fensters, also mit einem Index N+k, mit einem Abtastwert $y_2$ aus der ersten Hälfte des zweiten Fensters, also mit einem Index k summiert, so daß sich ausgangsseitig, also im Decodierer, N decodierte zeitliche Abtastwerte ergeben.

Es sei darauf hingewiesen, daß durch die Funktion der Einrichtung 416, die auch als Add-Funktion bezeichnet wird, die in dem durch Fig. 4a schematisch dargestellten Codierer durchgeführte Fensterung gewissermaßen automatisch berücksichtigt wird, so daß in dem durch Fig. 4b dargestellten Decodierer keine explizite "inverse Fensterung" stattzufinden hat.

Wenn die durch die Einrichtung 402 oder 404 implementierte Fensterfunktion mit w(k) bezeichnet wird, wobei der Index k den Zeitindex darstellt, bezeichnet wird, so muß die Bedingung erfüllt sein, daß das Fenstergewicht w(k) im Quadrat addiert zu dem Fenstergewicht w(N+k) im Quadrat zusammen 1 ergibt, wobei k von 0 bis N-1 läuft. Wenn ein Sinus-Fenster verwendet wird, dessen Fenster-Gewichtungen der ersten Halbwelle der Sinus-Funktion folgen, so ist diese Bedingung immer erfüllt, da das Quadrat des Sinus und das Quadrat des Cosinus für jeden Winkel zusammen den Wert 1 ergeben.

Nachteilig an dem in Fig. 4a beschriebenen Fenster-Verfahren mit anschließender MDCT-Funktion ist die Tatsache, daß die Fensterung durch Multiplikation eines zeitdiskreten Abtastwerts, wenn an ein Sinus-Fenster gedacht wird, mit einer Gleitkommazahl erreicht wird, da der Sinus eines Winkels zwischen 0 und 180 Grad abgesehen von dem Winkel 90 Grad keine Ganzzahl ergibt. Auch wenn ganzzahlige zeitdiskrete Abtastwerte gefenstert werden, entstehen nach dem Fenstern also Gleitkommazahlen.

Daher ist, auch wenn kein psychoakustischer Codierer verwendet wird, d. h. wenn eine verlustlose Codierung erreicht werden soll, am Ausgang der Einrichtungen 408 bzw. 410 eine Quantisierung notwendig, um eine einigermaßen überschaubare Entropie-Codierung durchführen zu können.

Wenn also bekannte Transformationen, wie sie anhand von Fig. 4a betrieben worden sind, für ein verlustloses Audiocodieren eingesetzt werden soll, muß entweder eine sehr feine Quantisierung eingesetzt werden, um den resultierenden Fehler aufgrund der Rundung der Gleitkommazahlen vernachlässigen zu können, oder das Fehlersignal muß zusätzlich beispielsweise im Zeitbereich codiert werden.

Ferner haben digitale Signalprozessoren üblicherweise einen Akkumulator mit größerer Wortlänge als die übliche Operatorlänge, um zu viele Rundungsoperationen zu vermeiden. Die Verwendung von schnellen Algorithmen für die Implementation einer Filterbank führt typischerweise zu dem Bedarf, Zwischenergebnisse zu speichern, die in späteren Schritten verwendet werden sollen. Die Zwischenergebnisse müssen auf die Operatorgenauigkeit gerundet werden oder müssen in zwei Speicheroperationen aufgeteilt werden. Typischerweise akkumulieren sich die Rundungsfehler mehrerer Verarbeitungsschritte. Wenn ferner berücksichtigt wird, daß die meisten Gleitkomma-DSPs eine Wortlänge von 32 Bit mit einer Mantisse von nur 24 Bit haben, ist es offensichtlich, was mit Eingangssignalen mit einer Genauigkeit von 24 Bit passiert.

Sowohl eine zu feine Quantisierung als auch das zusätzliche Codieren des Fehlersignals als Alternative resultieren in einem Codierer mit erhöhtem Rechenaufwand und erhöhter Komplexität, und damit auch in einem entsprechend aufwendigeren Decodierer. Insbesondere der Decodierer, der, wenn an die Verbreitung von Musik beispielsweise über das Internet gedacht wird, ein Massenprodukt ist, muß aufgrund dieser Tatsache preisgünstig sein, um sich gegenüber anderen Codierern am Markt durchsetzen zu können. Mit dieser Anforderung ist es oftmals nicht vereinbar, eine sehr feine Quantisierung zu verwenden oder ein zusätzliches Fehlersignal zu codieren, da der zusätzliche Mehraufwand zu höheren Decodiererkosten führt.

Gleichzeitig ist es auf Codiererseite auf dem konkurrenzintensiven Markt für Audiocodierer oftmals nicht tolerabel, zu große Datenmengen zu erzeugen. In anderen Worten ausgedrückt ist es von wesentlicher Bedeutung, einen möglichst hohen Kompressionsfaktor zu erreichen, da oftmals Bandbreite-begrenzte Netze existieren, welche dazu führen, daß ein zu gering komprimiertes Audiostück eine zu große Übertragungsdauer über ein solches Netz hat, was beim Kunden unmittelbar dazu führt, daß er sich für ein anderes Produkt mit höherer Datenkompression und damit geringerer Übertragungszeit entscheidet.

Die Aufgabe der vorliegenden Erfindung besteht darin, ein Codierer/Decodiererkonzept zu schaffen, das für die verlustlose Codierung geeignet ist und gleichzeitig eine hohe Datenkomprimierung bei vertretbarem Aufwand liefert.

Diese Aufgabe wird durch ein Verfahren zum Verarbeiten von zeitdiskreten Audio-Abtastwerten nach Patentanspruch 1, durch ein Verfahren zum Invers-Verarbeiten von ganzzahligen Werten nach Patentanspruch 17, durch eine Vorrichtung zum Verarbeiten von zeitdiskreten Audio-Abtastwerten nach Patentanspruch 22 oder durch eine Vorrichtung zum Invers-Verarbeiten von ganzzahligen Werten nach Patentanspruch 23 gelöst.

Der vorliegenden Erfindung liegt die Erkenntnis zugrunde, daß das Entstehen von Gleitkommawerten im Schritt des Fensterns dadurch vermieden werden kann, wenn die TDAC-Operation explizit im Zeitbereich, d. h. vor dem Ausführen einer Transformation, durchgeführt wird. Dies wird dadurch erreicht, daß im Gegensatz zum Stand der Technik bereits vor der Transformation die Überlappung berücksichtigt wird, und zwei zeitdiskrete Abtastwerte aus unterschiedlichen Vierteln eines Fensters verarbeitet werden. Die Verarbeitung findet dadurch statt, daß der Vektor der zwei zeitdiskreten Abtastwerte aus unterschiedlichen Vierteln des Fensters mit einer Drehmatrix beaufschlagt werden, wobei die Drehmatrix durch eine Mehrzahl von sogenannten Lifting-Matrizen darstellbar ist. Wie es bekannt ist, zeichnen sich Lifting-Matrizen dadurch aus, daß sie lediglich ein Element haben, das ungleich "0" oder "1" ist, d. h. das nicht-ganzzahlig ist. Durch sequentielles Ausführen einer Multiplikation einer Lifting-Matrix mit dem Vektor von zeitdiskreten Abtastwerten und anschließendes Runden der Komponente des Vektors, die nicht-ganzzahlig ist, werden Gleitkommazahlen unmittelbar nach ihrer Entstehung gleich gerundet. Es sei darauf hingewiesen, daß aufgrund der beschriebenen Eigenschaft der Lifting-Matrizen immer nur eine Komponente des Ergebnisvektors der Multiplikation gerundet werden muß.

Vorzugsweise ist die Drehmatrix eine Givens-Drehmatrix, die, wie es bekannt ist, durch drei Lifting-Matrizen darstellbar ist. Der Drehwinkel der Givens-Drehmatrix hängt von der Fensterfunktion ab. Es sei darauf hingewiesen, daß für das erfindungsgemäße Verfahren sämtliche Fensterfunktionen zulässig sind, so lange diese Fensterfunktionen die beschriebene Bedingung erfüllen, daß das Quadrat eines Fenstergewichts und das Quadrat eines um N Fenstergewichte zeitlich entfernten Fenstergewichts zusammen den Wert 1 ergeben. Es sei darauf hingewiesen, daß diese Bedingung auch durch zwei aufeinanderfolgende Fenster unterschiedlicher Form, wie z. B. ein Sinus-Fenster und ein Kaiser-Bessel-Fenster, erfüllt sein kann.

Bei einem bevorzugten Ausführungsbeispiel der vorliegenden Erfindung wird die MDCT-Verarbeitung mit 50%iger Überlappung durch Lifting-Matrizen und Rundungen und eine anschließende diskrete Cosinustransformation (DCT) mit nichtsymmetrischen Basisfunktionen, d. h. durch eine DCT vom Typ IV, ersetzt.

Um nicht nur eine ganzzahlige Fensterung sondern auch eine ganzzahlige diskrete Cosinustransformation zu erreichen, wird es ferner bevorzugt, auch die DCT-Transformation durch Givens-Rotationen und insbesondere durch Verarbeitung mit Lifting-Matrizen und Rundung nach jeder Lifting-Matrix-Multiplikation zu ersetzen.

Ein Vorteil der vorliegenden Erfindung besteht darin, daß nunmehr entweder beim Fenstern oder beim kompletten Transformieren die Ausgangswerte, also die gefensterten Abtastwerte oder die Spektralwerte ganzzahlig bleiben. Dennoch ist der gesamte Prozeß umkehrbar, indem einfach die inversen Rotationen in umgekehrter Reihenfolge bezüglich der Verarbeitung der Lifting-Matrizen und dieselbe Rundungsfunktion eingesetzt werden. Das erfindungsgemäße Konzept eignet sich somit als ganzzahlige Approximierung der MDCT mit perfekter Rekonstruierbarkeit und stellt somit eine ganzzahlige modifizierte diskrete Cosinustransformation (INT MDCT) dar.

Das erfindungsgemäße Konzept hat nach wie vor die günstigen Eigenschaften der MDCT, d. h. eine überlappende Struktur, die eine bessere Frequenzselektivität als nichtüberlappende Blocktransformationen liefert, und eine kritische Abtastung, so daß die Gesamtanzahl von Spektralwerten, die ein Audiosignal darstellen, nicht die Anzahl von Eingangs-Abtastwerten überschreitet. So werden zwar aufgrund der Rundungen in den Rotationsschritten Nichtlinearitäten eingeführt. Die Rundungen führen jedoch gleichzeitig dazu, daß der Zahlenbereich der ganzzahligen Spektralwerte den Zahlenbereich der Eingangswerte nicht wesentlich überschreitet. Obgleich aufgrund der überlappenden Struktur eine Energieerhaltung auf einer Block-um-Block-Basis, wie sie durch das Parsevalsche Theorem gegeben ist, nicht vorliegt, zeichnet sich die erfindungsgemäße ganzzahlige MDCT dadurch aus, daß die mittlere Energie pro Block beibehalten wird, da vorzugsweise lediglich gerundete Givens-Rotationen eingesetzt werden, die im allgemeinen energieerhaltend sind.

Ein Vorteil der vorliegenden Erfindung besteht ferner darin, daß aufgrund der Tatsache, daß ganzzahlige Ausgangswerte vorliegen, auf eine anschließende Quantisierung verzichtet werden kann, derart, daß die Ausgangswerte der ganzzahligen MDCT unmittelbar Entropie-codiert werden können, um einen verlustlosen Datenkomprimierer zu erhalten.

Bevorzugte Ausführungsbeispiele der vorliegenden Erfindung werden nachfolgend Bezug nehmend auf die beiliegenden Zeichnungen detailliert erläutert. Es zeigen:

Fig. 1    ein Blockschaltbild einer erfindungsgemäßen Vorrichtung zum Verarbeiten von zeitdiskreten Audio-Abtastwerten, um ganzzahlige Werte zu erhalten;

Fig. 2    eine schematische Darstellung der Zerlegung einer MDCT und einer inversen MDCT in Givens-Rotationen und zwei DCT-IV-Operationen gemäß einem bevorzugten Ausführungsbeispiel der vorliegenden Erfindung;

Fig. 3    eine Darstellung zur Veranschaulichung der Zerlegung der MDCT mit 50-Prozent-Überlappung in Rotationen und DCT-IV-Operationen;

Fig. 4a    ein schematisches Blockschaltbild eines bekannten Codierers mit MDCT und 50 Prozent Überlappung; und

Fig. 4b    ein Blockschaltbild eines bekannten Decodierers zum Decodieren der durch Fig. 4a erzeugten Werte.

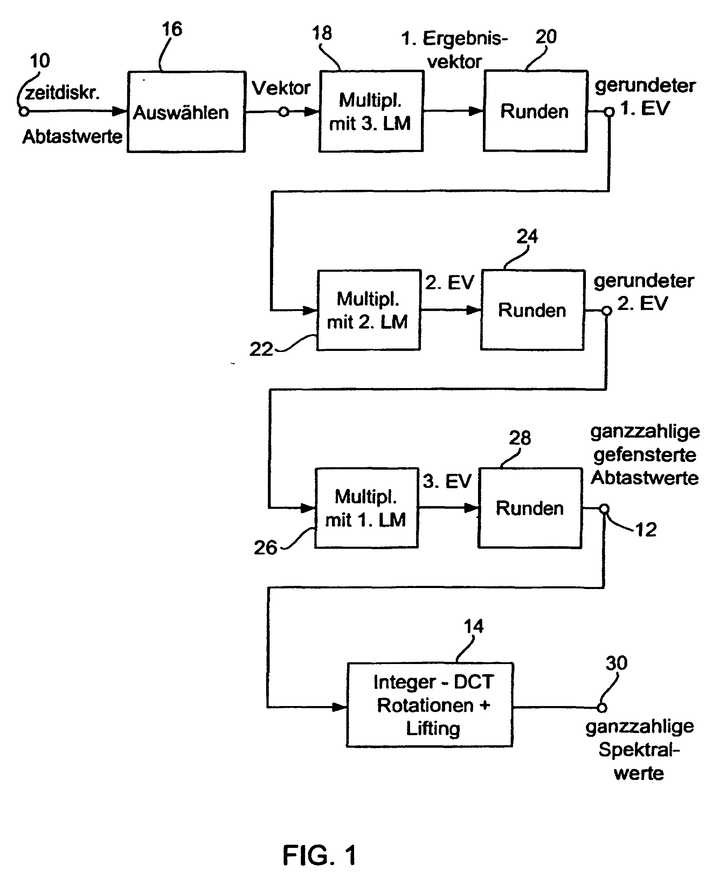

Fig. 1 zeigt ein Übersichtsdiagramm für die erfindungsgemäße Vorrichtung bzw. das erfindungsgemäße Verfahren zum Verarbeiten von zeitdiskreten Abtastwerten, die ein Audiosignal darstellen, um ganzzahlige Werte zu erhalten. Die zeitdiskreten Abtastwerte werden durch die in Fig. 1 gezeigte Vorrichtung gefenstert und optional in eine spektrale Darstellung umgesetzt. Die zeitdiskreten Abtastwerte, die an einem Eingang 10 in die Vorrichtung eingespeist werden, werden mit einem Fenster w mit einer Länge, die 2N zeitdiskreten Abtastwerten entspricht, gefenstert, um an einem Ausgang 12 ganzzahlige gefensterte Abtastwerte zu erreichen, welche dazu geeignet sind, um mittels einer Transformation und insbesondere der Einrichtung 14 zum Ausführen einer ganzzahligen DCT in eine spektrale Darstellung umgesetzt zu werden. Die ganzzahlige DCT ist ausgebildet, um aus N Eingangswerten N Ausgangswerte zu erzeugen, was im Gegensatz zu der MDCT-Funktion 408 von Fig. 4a steht, die aus 2N gefensterten Abtastwerten aufgrund der MDCT-Gleichung lediglich N Spektralwerte erzeugt.

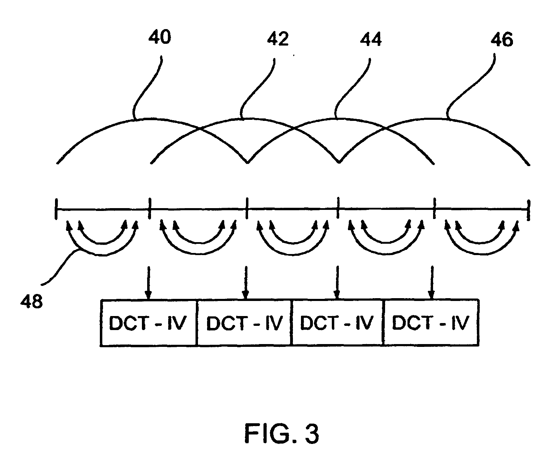

Zum Fenstern der zeitdiskreten Abtastwerte werden zunächst in einer Einrichtung 16 zwei zeitdiskrete Abtastwerte ausgewählt, die zusammen einen Vektor von zeitdiskreten Abtastwerten darstellen. Ein zeitdiskreter Abtastwert, der durch die Einrichtung 16 ausgewählt wird, liegt im ersten Viertel des Fensters. Der andere zeitdiskrete Abtastwert liegt in dem zweiten Viertel des Fensters, wie es anhand von Fig. 3 noch detaillierter ausgeführt wird. Der durch die Einrichtung 16 erzeugte Vektor wird nunmehr mit einer Drehmatrix der Dimension 2 x 2 beaufschlagt, wobei diese Operation nicht unmittelbar durchgeführt wird, sondern mittels mehrerer sogenannten Lifting-Matrizen.

Eine Lifting-Matrix hat die Eigenschaft, daß sie nur ein Element aufweist, das von dem Fenster w abhängt und ungleich "1" oder "0" ist.

Die Faktorisierung von Wavelet-Transformationen in Lifting-Schritte ist in der Fachveröffentlichung "Factoring Wavlet Transforms Into Lifting Steps", Ingrid Daubechies und Wim Sweldens, Preprint, Bell Laboratories, Lucent Technologies, 1996, dargestellt. Allgemein ist ein Lifting-Schema eine einfache Beziehung zwischen perfekt rekonstruierenden Filterpaaren, die dasselbe Tiefpaß- oder Hochpaßfilter haben. Jedes Paar komplementärer Filter kann in Lifting-Schritte faktorisiert werden. Insbesondere gilt dies für Givens-Rotationen. Es sei der Fall betrachtet, bei dem die Polyphasenmatrix eine Givens-Rotation ist. Es gilt dann:

$$\begin{pmatrix} \cos\alpha & -\sin\alpha \\ \sin\alpha & \cos\alpha \end{pmatrix} = \begin{pmatrix} 1 & \frac{\cos\alpha-1}{\sin\alpha} \\ 0 & 1 \end{pmatrix} \begin{pmatrix} 1 & 0 \\ \sin\alpha & 1 \end{pmatrix} \begin{pmatrix} 1 & \frac{\cos\alpha-1}{\sin\alpha} \\ 0 & 1 \end{pmatrix}$$

Jede der drei rechts des Gleichheitszeichens stehenden Lifting-Matrizen hat als Hauptdiagonalelemente den Wert "1". Ferner ist in jeder Lifting-Matrix ein Nebendiagonalelement gleich 0, und ein Nebendiagonalelement vom Drehwinkel α abhängig.

Der Vektor wird nunmehr mit der dritten Lifting-Matrix, d. h. der Liftingmatrix ganz rechts in obiger Gleichung, multipliziert, um einen ersten Ergebnisvektor zu erhalten. Dies ist in Fig. 1 durch eine Einrichtung 18 dargestellt. Erfindungsgemäß wird nunmehr der erste Ergebnisvektor mit einer beliebigen Rundungsfunktion, die die Menge der reellen Zahlen in die Menge der ganzen Zahlen abbildet, gerundet, wie es in Fig. 1 durch eine Einrichtung 20 dargestellt ist. Am Ausgang der Einrichtung 20 wird ein gerundeter erster Ergebnisvektor erhalten. Der gerundete erste Ergebnisvektor wird nunmehr in eine Einrichtung 22 zum Multiplizieren desselben mit der mittleren, d. h. zweiten, Lifting-Matrix eingespeist, um einen zweiten Ergebnisvektor zu erhalten, der in einer Einrichtung 24 wiederum gerundet wird, um einen gerundeten zweiten Ergebnisvektor zu erhalten. Der gerundete zweite Ergebnisvektor wird nunmehr in eine Einrichtung 26 eingespeist, und zwar zum Multiplizieren desselben mit der links in der obigen Gleichung aufgeführten, d. h. ersten, Liftingmatrix, um einen dritten Ergebnisvektor zu erhalten, der schließlich noch mittels einer Einrichtung 28 gerundet wird, um schließlich an dem Ausgang 12 ganzzahlige gefensterte Abtastwerte zu erhalten, die nun, wenn eine spektrale Darstellung derselben gewünscht wird, durch die Einrichtung 14 verarbeitet werden müssen, um an einem Spektralausgang 30 ganzzahlige Spektralwerte zu erhalten.

Vorzugsweise ist die Einrichtung 14 als Ganzzahl-DCT oder Integer-DCT ausgeführt.

Die diskrete Cosinus-Transformation gemäß Typ 4 (DCT-IV) mit einer Länge N ist durch folgende Gleichung gegeben:

$$X_t(m) = \sqrt{\frac{2}{N}} \sum_{k=0}^{N-1} x(k) \cos\left(\frac{\pi}{4N}(2k+1)(2m+1)\right)$$

Die Koeffizienten der DCT-IV bilden eine orthonormale N x N Matrix. Jede orthogonale N x N-Matrix kann in N (N-1)/2 Givens-Rotationen zerlegt werden, wie es in der Fachveröffentlichung P. P. Vaidyanathan, "Multirate Systems And Filter Banks", Prentice Hall, Englewood Cliffs, 1993, ausgeführt ist. Es sei darauf hingewiesen, daß auch weitere Zerlegungen existieren.

Bezüglich der Klassifikationen der verschiedenen DCT-Algorithmen sei auf H. S. Malvar, "Signal Processing With Lapped Transforms", Artech House, 1992, verwiesen. Allgemein unterscheiden sich die DCT-Algorithmen durch die Art ihrer Basisfunktionen. Während die DCT-IV, die bei der vorliegenden Erfindung bevorzugt wird, nicht-symmetrische Basisfunktionen umfaßt, d. h. eine Cosinus-Viertelwelle, eine Cosinus-3/4-Welle, eine Cosinus-5/4-Welle, eine Cosinus-7/4-Welle, etc., hat die diskrete Cosinustransformation z. B. vom Typ II (DCT-II), achsensymmetrische und punktsymmetrische Basisfunktionen. Die 0-te Basisfunktion hat einen Gleichanteil, die erste Basisfunktion ist eine halbe Cosinuswelle, die zweite Basisfunktion ist eine ganze Cosinuswelle, usw. Aufgrund der Tatsache, daß die DCT-II den Gleichanteil besonders berücksichtigt, wird sie bei der Videocodierung verwendet, nicht aber bei der Audiocodierung, da bei der Audiocodierung im Gegensatz zur Videocodierung der Gleichanteil nicht von Relevanz ist.

Im nachfolgend wird darauf eingegangen, wie der Drehwinkel $\alpha$ der Givens-Rotation von der Fensterfunktion abhängt.

Eine MDCT mit einer Fensterlänge von 2N kann in eine diskrete Cosinustransformation vom Typ IV mit einer Länge N reduziert werden. Dies wird dadurch erreicht, daß die TDAC-Operation explizit im Zeitbereich durchgeführt wird, und daß dann die DCT-IV angewandt wird. Bei einer 50%igen Überlappung überlappt die linke Hälfte des Fensters für einen Block t mit der rechten Hälfte des vorausgehenden Blocks, d. h. des Blocks t-1. Der überlappende Teil zwei aufeinanderfolgender Blöcke t-1 und t wird im Zeitbereich, d. h. vor der Transformation, folgendermaßen vorverarbeitet, d. h. zwischen dem Eingang 10 und dem Ausgang 12 von Fig. 1 verarbeitet:

$$\begin{pmatrix} \bar{x}_t(k) \\ \bar{x}_{t-1}(N-1-k) \end{pmatrix} = \begin{pmatrix} w(\frac{N}{2}+k) & -w(\frac{N}{2}-1-k) \\ w(\frac{N}{2}-1-k) & w(\frac{N}{2}+k) \end{pmatrix} \begin{pmatrix} x_t(\frac{N}{2}+k) \\ x_t(\frac{N}{2}-1-k) \end{pmatrix}$$

Die mit der Tilde bezeichneten Werte sind die Werte am Ausgang 12 von Fig. 1, während die ohne Tilde in der obigen Gleichung bezeichnete x Werte die Werte am Eingang 10 bzw. hinter der Einrichtung 16 zum Auswählen sind. Der Laufindex k läuft von 0 bis N/2-1, während w die Fensterfunktion darstellt.

Aus der TDAC-Bedingung für die Fensterfunktion w gilt folgender Zusammenhang:

$$w(\frac{N}{2}+k)^2 + w(\frac{N}{2}-1-k)^2 = 1$$

Für bestimmte Winkel $\alpha_k$, k = 0, ..., N/2-1 kann diese Vorverarbeitung im Zeitbereich als Givens-Rotation geschrieben werden, wie es ausgeführt worden ist.

Der Winkel $\alpha$ der Givens-Rotation hängt folgendermaßen von der Fensterfunktion w ab:

$$\alpha = \arctan[w(N/2-1-k) / w(N/2 + k)]$$

Es sei darauf hingewiesen, daß beliebige Fensterfunktionen w eingesetzt werden können, solange sie diese TDAC-Bedingung erfüllen.

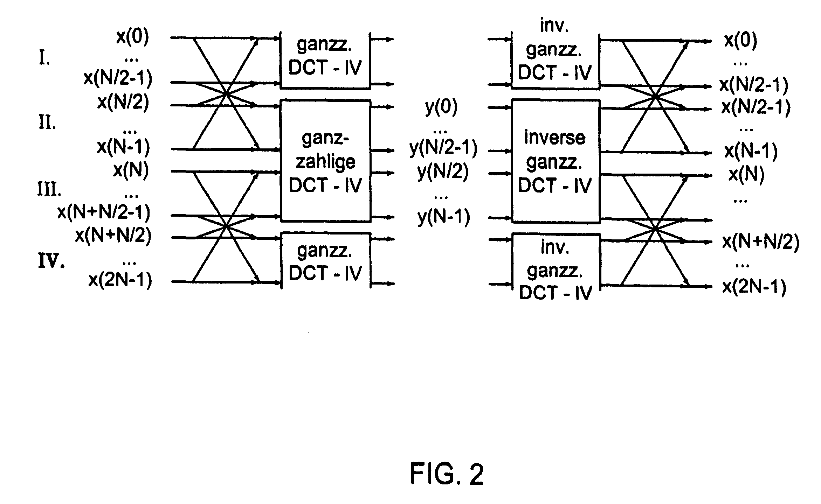

Im nachfolgenden wird anhand von Fig. 2 ein kaskadierter Codierer und Decodierer beschrieben. Die zeitdiskreten Abtastwerte x(0) bis x(2N-1), die durch ein Fenster gemeinsam "gefenstert" werden, werden zunächst derart durch die Einrichtung 16 von Fig. 1 ausgewählt, daß der Abtastwert x(0) und der Abtastwert x(N-1), d. h. ein Abtastwert aus dem ersten Viertel des Fensters und ein Abtastwert aus dem zweiten Viertel des Fensters, ausgewählt werden, um den Vektor am Ausgang der Einrichtung 16 zu bilden. Die sich überkreuzenden Pfeile stellen schematisch die Lifting-Multiplikationen und anschließenden Rundungen der Einrichtungen 18, 20 bzw. 22, 24 bzw. 26, 28 dar, um am Eingang der DCT-IV-Blöcke die ganzzahligen gefensterten Abtastwerte zu erhalten.

Wenn der erste Vektor wie oben beschrieben verarbeitet ist, wird ferner ein zweiter Vektor aus den Abtastwerten x(N/2-1) und x(N/2), d. h. wieder ein Abtastwert aus dem ersten Viertel des Fenster und ein Abtastwert aus dem zweiten Viertel des Fensters, ausgewählt und wiederum durch den in Fig. 1 beschriebenen Algorithmus verarbeitet. Analog dazu werden sämtliche anderen Abtastwertpaare aus dem ersten und zweiten Viertel des Fensters bearbeitet. Die selbe Verarbeitung wird für das dritte und vierte Viertel des ersten Fensters durchgeführt. Nunmehr liegen am Ausgang 12 2N gefensterte ganzzahlige Abtastwerte vor, die nunmehr so, wie es in Fig. 2 dargestellt ist, in eine DCT-IV-Transformation eingespeist werden. Insbesondere werden die ganzzahligen gefensterten Abtastwerte des zweiten und dritten Viertels in eine DCT eingespeist. Die gefensterten ganzzahligen Abtastwerte des ersten Viertels des Fensters werden in eine vorausgehende DCT-IV zusammen mit den gefensterten ganzzahligen Abtastwerten des vierten Viertels des vorausgehenden Fensters verarbeitet. Analog dazu wird das vierte Viertel der gefensterten ganzzahligen Abtastwerte in Fig. 2 mit dem ersten Viertel des nächsten Fensters zusammen in eine DCT-IV-Transformation eingespeist. Die mittlere in Fig. 2 gezeigte ganzzahlige DCT-IV-Transformation 32 liefert nunmehr N ganzzahlige Spektralwerte y(0) bis y(N-1). Diese ganzzahligen Spektralwerte können nunmehr beispielsweise einfach Entropie-codiert werden, ohne daß eine dazwischenliegende Quantisierung erforderlich ist, da die erfindungsgemäße Fensterung und Transformation ganzzahlige Ausgangswerte liefert.

In der rechten Hälfte von Fig. 2 ist ein Decodierer dargestellt. Der Decodierer bestehend aus Rücktransformation und "inverser Fensterung" arbeitet invers zum Codierer. Es ist bekannt, daß zur Rücktransformation einer DCT-IV eine inverse DCT-IV verwendet werden kann, wie es in Fig. 2 dargestellt ist. Die Ausgangswerte der Decodierer-DCT-IV 34 werden nunmehr, wie es in Fig. 2 dargestellt ist, mit den entsprechenden Werten der vorausgehenden Transformation bzw. der nachfolgenden Transformation gemäß der vorliegenden Erfindung invers verarbeitet, um aus den ganzzahligen gefensterten Abtastwerten am Ausgang der Einrichtung 34 bzw. der vorausgehenden und nachfolgenden Transformation wieder zeitdiskrete Audio-Abtastwerte x(0) bis x(2N-1) zu erzeugen.

Die ausgangsseitige Operation geschieht erfindungsgemäß durch eine inverse Givens-Rotation, d. h. derart, daß die Blöcke 26, 28 bzw. 22, 24 bzw. 18, 20 in der entgegengesetzten Richtung durchlaufen werden. Dies sei anhand der zweiten Lifting-Matrix von Gleichung 1 näher dargestellt. Wenn (im Codierer) der zweite Ergebnisvektor durch Multiplikation des gerundeten ersten Ergebnisvektors mit der zweiten Liftingmatrix (Einrichtung 22) gebildet wird, so ergibt sich folgender Ausdruck:

$$(x,y) \mapsto (x, y + x \sin \alpha)$$

Die Werte x, y auf der rechten Seite von Gleichung 6 sind Ganzzahlen. Dies trifft jedoch für den Wert x sin $\alpha$ nicht zu. Hier muß die Rundungsfunktion r eingeführt werden, wie es in der nachfolgenden Gleichung

$$(x,y) \mapsto (x, y + r(x \sin \alpha))$$

dargestellt ist. Diese Operation führt die Einrichtung 24 aus.

Die inverse Abbildung (im Decodierer) ist folgendermaßen definiert:

$$(x',y') \mapsto (x', y' - r(x' \sin \alpha))$$

Aufgrund dem Minuszeichen vor der Rundungsoperation wird ersichtlich, daß die ganzzahlige Approximierung des Lifting-Schritts umgekehrt werden kann, ohne daß ein Fehler eingeführt wird. Die Anwendung dieser Approximation auf jeden der drei Lifting-Schritte führt zu einer ganzzahligen Approximation der Givens-Rotation. Die gerundete Rotation (im Codierer) kann umgekehrt werden (im Decodierer), ohne daß ein Fehler eingeführt wird, und zwar indem die inversen gerundeten Lifting-Schritte in umgekehrter Reihenfolge durchlaufen werden, d. h. wenn beim Decodieren der Algorithmus von Fig. 1 von unten nach oben durchgeführt wird.

Wenn die Rundungsfunktion r punktsymmetrisch ist, ist die inverse gerundete Rotation identisch zu der gerundeten Rotation mit dem Winkel -$\alpha$ und lautet folgendermaßen:

$$\begin{pmatrix} \cos \alpha & \sin \alpha \\ -\sin \alpha & \cos \alpha \end{pmatrix}$$

Die Lifting-Matrizen für den Decodierer, d. h. für die inverse Givens-Rotation, ergibt sich in diesem Fall unmittelbar aus Gleichung (1), indem lediglich der Ausdruck "sin $\alpha$" durch den Ausdruck "-sin $\alpha$" ersetzt wird.

Im nachfolgenden wird anhand von Fig. 3 noch einmal die Zerlegung einer üblichen MDCT mit überlappenden Fenstern 40 bis 46 dargelegt. Die Fenster 40 bis 46 überlappen jeweils zu 50%. Pro Fenster werden zunächst Givens-Rotationen innerhalb des ersten und zweiten Viertels eines Fensters bzw. innerhalb des dritten und vierten Viertels eines Fensters ausgeführt, wie es durch die Pfeile 48 schematisch dargestellt ist. Dann werden die rotierten Werte, d. h. die gefensterten ganzzahligen Abtastwerte derart in eine N-zu-N-DCT eingespeist, daß immer das zweite und dritte Viertel eines Fensters bzw. das vierte und erste Viertel eines darauffolgenden Fensters gemeinsam mittels eines DCT-IV-Algorithmus in eine spektrale Darstellung umgesetzt wird.

Erfindungsgemäß werden daher die üblichen Givens-Rotation in Lifting-Matrizen zerlegt, die sequentiell ausgeführt werden, wobei nach jeder Lifting-Matrix-Multiplikation ein Rundungsschritt eingeführt wird, derart, daß die Gleitkomma-Zahlen unmittelbar nach ihrer Entstehung gerundet werden, derart, daß vor jeder Multiplikation eines Ergebnisvektors mit einer Lifting-Matrix der Ergebnisvektor lediglich Ganzzahlen hat.

Die Ausgangswerte bleiben also immer ganzzahlig, wobei es bevorzugt wird, auch ganzzahlige Eingangswerte zu verwenden. Dies stellt keine Einschränkung dar, da jegliche beispielsweise PCM-Abtastwerte, wie sie auf einer CD abgespeichert sind, ganzzahlige Zahlenwerte sind, deren Wertebereich je nach Bitbreite variiert, d. h. abhängig davon, ob die zeitdiskreten digitalen Eingangswerte 16-Bit-Werte oder 24-Bit-Werte sind. Dennoch ist, wie es ausgeführt worden ist, der gesamte Prozeß invertierbar, indem die inversen Rotationen in umgekehrter Reihenfolge ausgeführt werden. Erfindungsgemäß existiert somit eine ganzzahlige Approximation der MDCT mit perfekter Rekonstruktion, also eine verlustlose Transformation.

Die erfindungsgemäße Transformation liefert ganzzahlige Ausgangswerte statt Gleitkommawerte. Sie liefert eine perfekte Rekonstruktion, so daß kein Fehler eingeführt wird, wenn eine Vorwärts- und dann eine Rückwärtstransformation ausgeführt werden. Die Transformation ist gemäß einem bevorzugten Ausführungsbeispiel der vorliegenden Erfindung ein Ersatz für die modifizierte diskrete Cosinustransformation. Auch andere Transformationsverfahren können jedoch ganzzahlig ausgeführt werden, so lange eine Zerlegung in Rotationen und eine Zerlegung der Rotationen in Lifting-Schritte möglich ist.

Die ganzzahlige MDCT gemäß der vorliegenden Erfindung hat die meisten günstigen Eigenschaften der MDCT. Sie hat eine überlappende Struktur, wodurch eine bessere Frequenzselektivität als bei nicht-überlappenden Blocktransformationen erhalten wird. Aufgrund der TDAC-Funktion, die bereits beim Fenstern vor der Transformation berücksichtigt wird, wird eine kritische Abtastung beibehalten, so daß die Gesamtanzahl von Spektralwerten, die ein Audiosignal darstellen, gleich der Gesamtanzahl von Eingangs-Abtastwerten ist.

Verglichen mit einer normalen MDCT, die Gleitkomma-Abtastwerte liefert, zeigt sich bei der erfindungsgemäßen ganzzahligen Transformation, daß lediglich in dem Spektralbereich, in dem wenig Signalpegel ist, das Rauschen im Vergleich zur normalen MDCT erhöht ist, während sich diese Rauscherhöhung bei signifikanten Signalpegeln nicht bemerkbar macht. Dafür bietet sich die erfindungsgemäße ganzzahlige Verarbeitung für eine effiziente Hardware-Implementation an, da lediglich Multiplikationsschritte verwendet werden, die ohne weiteres in Verschieben-Addieren-Schritte (Shift/Add-Schritte) zerlegt werden können, welche einfach und schnell hardwaremäßig implementiert werden können.

Die erfindungsgemäße ganzzahlige Transformation liefert eine gute spektrale Darstellung des Audiosignals und bleibt dennoch im Bereich der ganzen Zahlen. Wenn sie auf tonale Teile eines Audiosignals angewandt wird, resultiert dies in einer guten Energiekonzentrierung. Damit kann ein effizientes verlustloses Codierschema aufgebaut werden, indem einfach die in Fig. 1 dargestellte erfindungsgemäße Fensterung/Transformation mit einem Entropiecodierer kaskadiert wird. Insbesondere ein gestapeltes Codieren (Stacked Coding) unter Verwendung von Escape-Werten, wie es in MPEG AAC eingesetzt wird, ist für die vorliegende Erfindung günstig. Es wird bevorzugt, alle Werte um eine bestimmte Potenz von zwei herunterzuskalieren, bis sie in eine erwünschte Codetabelle passen, und dann die weggelassenen niederstwertigen Bits zusätzlich zu codieren. Im Vergleich zu der Alternative der Verwendung von größeren Codetabellen ist die beschriebene Alternative hinsichtlich des Speicherverbrauchs zum Speichern der Codetabellen günstiger. Ein nahezu verlustloser Codierer könnte auch dadurch erhalten werden, daß einfach bestimmte der niederstwertigen Bits weggelassen werden.

Insbesondere für tonale Signale ermöglicht eine Entropie-Codierung der ganzzahligen Spektralwerte einen hohen Codiergewinn. Für transiente Teile des Signals ist der Codiergewinn niedrig, und zwar aufgrund des flachen Spektrums transienter Signale, d. h. aufgrund einer geringen Anzahl von Spektralwerten, die gleich oder nahezu 0 sind. Wie es in J. Herre, J. D. Johnston: "Enhancing the Performance of Perceptual Audio Coders by Using Temporal Noise Shaping (TNS)" 101. AES Convention, Los Angeles, 1996, Preprint 4384, beschrieben ist, kann diese Flachheit jedoch verwendet werden, indem eine lineare Prädiktion im Frequenzbereich verwendet wird. Eine Alternative ist eine Prädiktion mit offener Schleife. Eine andere Alternative ist der Prädiktor mit geschlossener Schleife. Die erste Alternative, d. h. der Prädiktor mit offener Schleife, wird TNS genannt. Die Quantisierung nach der Prädiktion führt zu einer Adaption des resultierenden Quantisierungsrauschens an die zeitliche Struktur des Audiosignals und verhindert daher Vorechos in psychoakustischen Audiocodierern. Für ein verlustloses Audiocodieren ist die zweite Alternative, d. h. mit einem Prädiktor mit geschlossener Schleife, geeigneter, da die Prädiktion mit geschlossener Schleife eine genaue Rekonstruktion des Eingangssignals erlaubt. Wenn diese Technik auf ein erfindungsgemäß erzeugtes Spektrum angewendet wird, muß ein Rundungsschritt nach jedem Schritt des Prädiktionsfilters durchgeführt werden, um im Bereich der Ganzzahlen zu bleiben. Durch Verwenden des inversen Filters und derselben Rundungsfunktion kann das ursprüngliche Spektrum genau wieder hergestellt werden.

Um die Redundanz zwischen zwei Kanälen zur Datenreduktion auszunutzen, kann auch eine Mitte-Seite-Codierung verlustlos eingesetzt werden, wenn eine gerundete Rotation mit einem Winkel $\pi/4$ verwendet wird. Im Vergleich zur Alternative des Berechnens der Summe und Differenz des linken und rechten Kanals eines Stereosignals hat die gerundete Rotation den Vorteil der Energieerhaltung. Die Verwendung sogenannter Joint-Stereo-Codiertechniken kann für jedes Band einoder ausgeschaltet werden, wie es auch im Standard MPEG AAC durchgeführt wird. Weitere Drehwinkel können ebenfalls berücksichtigt werden, um eine Redundanz zwischen zwei Kanälen flexibler reduzieren zu können.

**Patentansprüche**

1. Verfahren zum Verarbeiten von zeitdiskreten Abtastwerten, die ein Audiosignal darstellen, um ganzzahlige Werte zu erhalten, mit folgenden Schritten:

   Fenstern der zeitdiskreten Abtastwerte mit einem Fenster (w) mit einer Länge, die 2N zeitdiskreten Abtastwerten entspricht, um gefensterte zeitdiskrete Abtastwerte für eine Umsetzung der zeitdiskreten Abtastwerte in eine spektrale Darstellung mittels einer Transformation zu liefern, die aus N Eingangswerten N Ausgangswerte erzeugen kann, wobei das Fenstern folgende Teilschritte aufweist:

   Auswählen (16) eines zeitdiskreten Abtastwerts aus einem Viertel des Fensters und eines zeitdiskreten Abtastwerts aus einem anderen Viertel des Fensters, um einen Vektor von zeitdiskreten Abtastwerten zu erhalten;

   Beaufschlagen des Vektors mit einer quadratischen Drehmatrix, deren Dimension mit der Dimension des Vektors übereinstimmt, wobei die Drehmatrix durch eine Mehrzahl von Lifting-Matrizen darstellbar ist, wobei eine Lifting-Matrix nur ein Element aufweist, das von dem Fenster (w) abhängt und ungleich 1 oder 0 ist, wobei der Teilschritt des Beaufschlagens folgende Unterschritte aufweist:

   Multiplizieren (18) des Vektors mit einer Lifting-Matrix, um einen ersten Ergebnisvektor zu erhalten;

   Runden (20) einer Komponente des ersten Ergebnisvektors mit einer Rundungsfunktion (r), die eine reelle Zahl auf eine ganze Zahl abbildet, um einen gerundeten ersten Ergebnisvektor zu erhalten; und

   sequentielles Durchführen der Schritte des Multiplizierens (22) und Rundens (24) mit einer anderen Lifting-Matrix, bis alle Lifting-Matrizen abgearbeitet sind, um einen gedrehten Vektor zu erhalten, der einen ganzzahligen gefensterten Abtastwert aus dem Viertel des Fensters und einen ganzzahligen gefensterten Abtastwert aus dem anderen Viertel des Fensters aufweist.

2. Verfahren nach Anspruch 1, bei dem die Lifting-Matrizen 2 x 2-Matrizen sind, und bei dem insgesamt drei Lifting-Matrizen pro Drehmatrix vorhanden sind.

3. Verfahren nach Anspruch 1 oder 2, bei dem der Schritt des Multiplizierens des Vektors oder eines gerundeten Ergebnisvektors durch Bilden von Partialprodukten und Aufsummieren der Partialprodukte durchgeführt wird, wobei der Schritt des Rundens mit nicht-ganzzahligen Partialprodukten durchgeführt wird, bevor aufsummiert wird.

4. Verfahren nach einem der vorhergehenden Ansprüche, bei dem das Fenster eine Anzahl 2N von Abtastwerten aufweist, die gleich einer Potenz der Basis 2 ist.

5. Verfahren nach einem der vorhergehenden Ansprüche, bei dem die Drehmatrix eine Givens-Drehmatrix ist.

6. Verfahren nach einem der vorhergehenden Schritte, das ferner folgenden Schritt aufweist:

   Durchführen des Schritt des Fensters für alle zeitdiskreten Abtastwerte der verbleibenden Viertel des Fensters, um 2N gefilterte ganzzahlige Abtastwerte zu erhalten; und

   Umsetzen (14) von N gefensterten ganzzahligen Abtastwerten in eine spektrale Darstellung durch eine Ganzzahl-DCT für Werte mit den gefilterten ganzzahligen Abtastwerten des zweiten Viertels und des dritten Viertels des Fensters, um N ganzzahlige Spektralwerte zu erhalten.

7. Verfahren nach Anspruch 6, bei dem die Ganzzahl-DCT eine DCT ist, die nicht-symmetrische Basisfunktionen aufweist.

8. Verfahren nach Anspruch 7, bei dem die DCT eine Typ-IV-DCT ist.

9. Verfahren nach einem der Ansprüche 6 bis 8, bei dem die DCT in Givens-Rotationsmatrizen und diese wiederum in Lifting-Matrizen zerlegbar ist, wobei nach jeder Multiplikation mit einer Lifting-Matrix ein Rundungsschritt folgt.

**10.** Verfahren nach einem der vorhergehenden Ansprüche, bei dem die Givens-Drehmatrix folgende Gestalt hat:

$$\begin{pmatrix} \cos\alpha & -\sin\alpha \\ \sin\alpha & \cos\alpha \end{pmatrix}$$

bei dem die Lifting-Matrizen folgende Gestalt haben:

$$\begin{pmatrix} 1 & \frac{\cos\alpha-1}{\sin\alpha} \\ 0 & 1 \end{pmatrix} \begin{pmatrix} 1 & 0 \\ \sin\alpha & 1 \end{pmatrix} \begin{pmatrix} 1 & \frac{\cos\alpha-1}{\sin\alpha} \\ 0 & 1 \end{pmatrix}$$

bei dem der Winkel $\alpha$ folgendermaßen definiert ist:

$$\alpha = \arctan[w(N/2-1-k) / w(N/2 + k)]$$

wobei k ein Zeitindex der zeitdiskreten Abtastwerte ist und von 0 bis 2N-1 läuft und wobei w eine Fensterfunktion ist.

**11.** Verfahren nach einem der vorhergehenden Ansprüche, bei dem für die Fensterfunktion w folgende Bedingung erfüllt ist:

$$w(\frac{N}{2} + k)^2 + w(\frac{N}{2} - 1 - k)^2 = 1$$

**12.** Verfahren nach Anspruch 11, bei dem das Fenster ein Sinusfenster ist.

**13.** Verfahren nach einem der vorhergehenden Ansprüche, bei dem die zeitdiskreten Abtastwerte ganzzahlig sind.

**14.** Verfahren nach Anspruch 6, das ferner folgenden Schritt aufweist:

Entropie-Codieren der ganzzahligen Spektralwerte, um eine Entropie-codierte Version des Audiosignals zu erhalten.

**15.** Verfahren nach Anspruch 6, das ferner den Schritt des Quantisierens der ganzzahligen Spektralwerte unter Berücksichtigung der psychoakustischen Maskierungsschwelle aufweist, um quantisierte Spektralwerte zu erhalten, die so quantisiert sind, daß das Quantisierungsrauschen im wesentlichen maskiert ist.

**16.** Verfahren nach Anspruch 6, das ferner den Schritt des Filterns der ganzzahligen Spektralwerte über der Frequenz mittels eines Prädiktors mit geschlossener Schleife und das Runden von Prädiktionsfehlerwerten aufweist.

**17.** Verfahren zum Invers-Verarbeiten von ganzzahligen Werten, die durch das Verfahren nach Anspruch 1 erzeugt worden sind, mit folgenden Schritten:

Beaufschlagen des gedrehten Vektors mit einer zu der Drehmatrix inversen Drehmatrix, wobei die inverse Drehmatrix durch eine Mehrzahl von Invers-Lifting-Matrizen darstellbar ist, wobei eine Invers-Lifting-Matrix nur ein Element aufweist, das von dem Fenster abhängt und ungleich 1 oder 0 ist, wobei der Schritt des Beaufschlagens folgende Teilschritte aufweist:

Multiplizieren des gedrehten Vektors mit einer Invers-Lifting-Matrix, die zu der Lifting-Matrix invers ist, die beim Erzeugen der ganzzahligen Werte zuletzt verwendet worden ist, um einen ersten Invers-Ergebnisvektor zu erhalten;

Runden einer Komponente des ersten Invers-Ergebnisvektors mit der Rundungsfunktion, um einen gerundeten ersten Invers-Ergebnisvektor zu erhalten; und

sequentielles Durchführen der Schritte des Multiplizierens und Rundens mit weiteren Lifting-Matrizen in einer Reihenfolge, die bezüglich der Reihenfolge beim Erzeugen der ganzzahligen Werte umgekehrt ist, um einen invers verarbeiteten Vektor zu erhalten, der einen ganzzahligen zeitdiskreten Abtastwert aus einem Viertel des Fensters und einen ganzzahligen zeitdiskreten Abtastwert aus einem anderen Viertel des Fensters umfassen.

18. Verfahren nach Anspruch 17, bei dem die ganzzahligen Werte durch das Verfahren nach Anspruch 2 erzeugt sind und ganzzahlige Spektralwerte umfassen, und bei dem ferner vor dem Schritt des Beaufschlagens des gedrehten Vektors folgender Schritt ausgeführt wird:

Umsetzen der ganzzahligen Spektralwerte durch eine zu der Ganzzahl-DCT beim Erzeugen inverse Ganzzahl-DCT in eine zeitliche Darstellung, um den gedrehten Vektor zu erhalten.

19. Verfahren nach Anspruch 17 oder 18, bei dem die Rundungsfunktion punktsymmetrisch ist, und bei dem die Invers-Lifting-Matrizen identisch zu den Lifting-Matrizen sind, jedoch mit einem negativen Drehwinkel.

20. Verfahren nach Anspruch 18, bei dem die Ganzzahl-DCT eine von einer DCT vom Typ IV abgeleitete DCT ist.

21. Verfahren nach einem der Ansprüche 17 bis 20, bei dem die Invers-Lifting-Matrizen identisch zu den entsprechenden Lifting-Matrizen sind, jedoch abgesehen von Nebendiagonal-Elementen, die im Vergleich zu den Lifting-Matrizen bei den Invers-Lifting-Matrizen negativ sind.

22. Vorrichtung zum Verarbeiten von zeitdiskreten Abtastwerten, die ein Audiosignal darstellen, um ganzzahlige Werte zu erhalten, mit folgenden Merkmalen:

einer Einrichtung zum Fenstern der zeitdiskreten Abtastwerte mit einem Fenster (w) mit einer Länge, die 2N zeitdiskreten Abtastwerten entspricht, um gefensterte zeitdiskrete Abtastwerte für eine Umsetzung der zeitdiskreten Abtastwerte in eine spektrale Darstellung mittels einer Transformation zu liefern, die aus N Eingangswerten N Ausgangswerte erzeugen kann, wobei die Einrichtung zum Fenstern folgende Teilmerkmale aufweist:

eine Einrichtung zum Auswählen (16) eines zeitdiskreten Abtastwerts aus einem Viertel des Fensters und eines zeitdiskreten Abtastwerts aus einem anderen Viertel des Fensters, um einen Vektor von zeitdiskreten Abtastwerten zu erhalten;

eine Einrichtung zum Beaufschlagen des Vektors mit einer quadratischen Drehmatrix, deren Dimension mit der Dimension des Vektors übereinstimmt,

wobei die Drehmatrix durch eine Mehrzahl von Lifting-Matrizen darstellbar ist, wobei eine Lifting-Matrix nur ein Element aufweist, das von dem Fenster (w) abhängt und ungleich 1 oder 0 ist, wobei die Einrichtung zum Beaufschlagen folgende Untermerkmale aufweist:

eine Einrichtung zum Multiplizieren (18) des Vektors mit einer Lifting-Matrix, um einen ersten Ergebnisvektor zu erhalten;

eine Einrichtung zum Runden (20) einer Komponente des ersten Ergebnisvektors mit einer Rundungsfunktion (r), die eine reelle Zahl auf eine ganze Zahl abbildet, um einen gerundeten ersten Ergebnisvektor zu erhalten; und

eine Einrichtung zum sequentiellen Durchführen der Schritte des Multiplizierens (22) und Rundens (24) mit einer anderen Lifting-Matrix, bis alle Lifting-Matrizen abgearbeitet sind, um einen gedrehten Vektor zu erhalten, der einen ganzzahligen gefensterten Abtastwert aus dem Viertel des Fensters und einen ganzzahligen gefensterten Abtastwert aus dem anderen Viertel des Fensters aufweist.

23. Vorrichtung zum Invers-Verarbeiten von ganzzahligen Werten, die durch die Vorrichtung nach Anspruch 22 erzeugt worden sind, mit folgenden Merkmalen:

einer Einrichtung zum Beaufschlagen des gedrehten Vektors mit einer zu der Drehmatrix inversen Drehmatrix, wobei die inverse Drehmatrix durch eine Mehrzahl von Invers-Lifting-Matrizen darstellbar ist, wobei eine Invers-Lifting-Matrix nur ein Element aufweist, das von dem Fenster abhängt und ungleich 1 oder 0 ist, wobei die Einrichtung zum Beaufschlagen folgende Teilmerkmale aufweist:

eine Einrichtung zum Multiplizieren des gedrehten Vektors mit einer Invers-Lifting-Matrix, die zu der Lifting-Matrix invers ist, die beim Erzeugen der ganzzahligen Werte zuletzt verwendet worden ist, um einen ersten Invers-Ergebnisvektor zu erhalten;

eine Einrichtung zum Runden einer Komponente des ersten Invers-Ergebnisvektors mit der Rundungsfunktion, um einen gerundeten ersten Invers-Ergebnisvektor zu erhalten; und

eine Einrichtung zum sequentiellen Durchführen des Multiplizierens und Rundens mit weiteren Lifting-Matrizen in einer Reihenfolge, die bezüglich der Reihenfolge beim Erzeugen der ganzzahligen Werte umgekehrt ist, um einen invers verarbeiteten Vektor zu erhalten, der einen ganzzahligen zeitdiskreten Abtastwert aus einem Viertel des Fensters und einen ganzzahligen zeitdiskreten Abtastwert aus einem anderen Viertel des Fensters umfassen.

**Claims**

1. Method for processing time-discrete sampled values representing an audio signal so as to obtain integer values, comprising the following steps:

windowing the time-discrete sampled values with a window (w) with a length corresponding to 2N time-discrete sampled values so as to provide windowed time-discrete sampled values for a conversion of the time-discrete sampled values in a spectral representation by means of a transform which may generate N output values from N input values, with the windowing comprising the following sub-steps:

selecting (16) a time-discrete sampled value from a quarter of the window and a time-discrete sampled value from another quarter of the window so as to obtain a vector of time-discrete sampled values;

applying a square rotation matrix to the vector, the dimension of which coincides with the dimension of the vector, with the rotation matrix being adapted to be represented by a plurality of lifting matrices, with one lifting matrix only comprising one element which depends on the window (w) and is unequal to 1 or 0, with the sub-step of applying comprising the following sub-steps:

multiplying (18) the vector by a lifting matrix so as to obtain a first result vector;

rounding (20) a component of the first result vector with a rounding function (r) mapping a

real number onto an integer number so as to obtain a rounded first result vector;

sequentially carrying out the steps of multiplying (22) and rounding (24) with another lifting matrix until all lifting matrices have been processed so as to obtain a rotated vector comprising an integer windowed sampled value from the quarter of the window and an integer windowed sampled value from the other quarter of the window.

2. Method in accordance with claim 1, wherein the lifting matrices are 2 x 2 matrices and where a total of three lifting matrices are available per rotation matrix.

3. Method in accordance with claim 1 or 2, wherein the step of multiplying the vector or a rounded result vector is carried out by forming partial products and summing up the partial products, with the step of rounding being carried out with non-integer partial products before being summed up.

4. Method in accordance with one of the preceding claims, wherein the window comprises a number of 2N sampled values which is equal to a power of the basis 2.

**5.** Method in accordance with one of the preceding claims, wherein the rotation matrix is a Givens rotation matrix.

**6.** Method in accordance with one of the preceding steps, further comprising the following step:

carrying out the step of windowing for all time-discrete sampled values of the remaining quarter of the window so as to obtain 2N filtered integer sampled values; and

converting (14) N windowed integer sampled values in a spectral representation by an integer DCT for values with the filtered integer sampled values of the second quarter and the third quarter of the window so as to obtain N integer spectral values.

**7.** Method in accordance with claim 6, wherein the integer DCT is a DCT comprising non-symmetric basis functions.

**8.** Method in accordance with claim 7, wherein the DCT is a type-IV-DCT.

**9.** Method in accordance with one of claims 6 to 8, wherein the DCT is adapted to be decomposed into Givens rotation matrices and the same are again decomposable into lifting matrices, wherein, after each multiplication with a lifting matrix, a rounding step is carried out.

**10.** Method in accordance with one of the preceding claims, wherein the Givens rotation matrix has the following shape:

$$\begin{pmatrix} \cos\alpha & \sin\alpha \\ -\sin\alpha & \cos\alpha \end{pmatrix}$$

wherein the lifting matrices comprise the following shape:

$$\begin{pmatrix} \cos\alpha & -\sin\alpha \\ \sin\alpha & \cos\alpha \end{pmatrix} = \begin{pmatrix} 1 & \frac{\cos\alpha - 1}{\sin\alpha} \\ 0 & 1 \end{pmatrix} \begin{pmatrix} 1 & 0 \\ \sin\alpha & 1 \end{pmatrix} \begin{pmatrix} 1 & \frac{\cos\alpha - 1}{\sin\alpha} \\ 0 & 1 \end{pmatrix}$$

wherein the angle $\alpha$ is defined as follows:

$$\alpha = \arctan [w(N/2-1-k) / w (N/2 + k)]$$

with k being a time index of the time-discrete sampled values and running from 0 to 2N-1 and with w being a window function.

**11.** Method in accordance with one of the preceding claims, wherein the following condition is fulfilled for the window function w:

$$w\left(\frac{N}{2} + k\right)^2 + w\left(\frac{N}{2} - 1 - k\right)^2 = 1$$

**12.** Method in accordance with claim 11, wherein the window is a sine window.

**13.** Method in accordance with one of the preceding claims, wherein the time-discrete sampled values are integers.

**14.** Method in accordance with claim 6, further comprising the following step:

entropy-encoding of the integer spectral values so as to obtain an entropy-encoded version of the audio signal.

15. Method in accordance with claim 6, further comprising the step of quantizing the integer spectral values considering the psychoacoustic masking threshold so as to obtain quantized spectral values which are quantized such that the quantizing noise has been essentially masked.

16. Method in accordance with claim 6, further comprising the step of filtering the integer spectral values over the frequency by means of a predictor with a closed loop and the step of rounding of prediction errors.

17. Method for inverse processing of integer values having been generated by the method in accordance with claim 1, comprising the following steps:

applying the rotated vector with a rotation matrix inverse to the rotation matrix, with the inverse rotation matrix being adjusted to be represented by a plurality of inverse lifting matrices, with an inverse lifting matrix only comprising one element depending on the window and being unequal to 1 or 0, with the step of applying comprising the following sub-steps:

multiplying the rotated vector with an inverse lifting matrix being inverse to the lifting matrix which has been used when generating the integer values so as to obtain a first inverse result vector;

rounding a component of the first inverse result vector with the rounding function so as to obtain a rounded first inverse result vector; and

sequentially carrying out the steps of multiplying and rounding with further lifting matrices in an order which is inversed with respect to the order when generating the integer values so as to obtain an inversely processed vector which includes an integer time-discrete sampled value from a quarter of the window and an integer time-discrete sampled value from another quarter of the window.

18. Method in accordance with claim 17, wherein the integer values have been generated by the method in accordance with claim 2 and include integer spectral values and wherein, prior to the step of applying the rotated vector, the following step is carried out:

converting the integer spectral values by an integer DCT inverse to the integer DCT into a time representation so as to obtain the rotated vector.

19. Method in accordance with claim 17 or 18, wherein the rounding function is point-symmetric and wherein the inverse lifting matrices are identical to the lifting matrices, but with a negative rotary angle.

20. Method in accordance with claim 18, wherein the integer DCT is a DCT derived from the DCT of the type IV.

21. Method in accordance with one of claims 17 to 20, wherein the inverse lifting matrices are identical to the corresponding lifting matrices, however, apart from subsidiary diagonal elements which are, in the inverse lifting matrices, negative as compared to the lifting matrices.

22. Apparatus for processing time-discrete sampled values representing an audio signal so as to obtain integer values, comprising:

means for windowing the time-discrete sampled values with a window (w) having a length corresponding to two 2N time-discrete sampled values so as to provide windowed time-discrete sampled values for a conversion of the time-discrete sampled values in a spectral representation by means of a transform which may generate N output values from N input values, with the means for windowing comprising the following sub-features:

means for selecting (16) a time-discrete sampled value from a quarter of the window and a time-discrete sampled value from another quarter of the window so as to obtain a vector of time-discrete sampled values;

means for applying a square rotation matrix to the vector, the dimension of which coincides with the dimension of the vector, with the rotation matrix being adjusted to be represented by a plurality of lifting matrices, with one lifting matrix only comprising one element which depends on the window (w) and is unequal to 1 or 0, with a means for applying comprising the following sub-features:

means for multiplying (18) the vector by a lifting matrix so as to obtain a first result vector;

means for rounding (20) a component of the first result vector with a rounding function (r) mapping a real number to an integer number so as to obtain a rounded first result vector; and

means for sequentially carrying out the steps of multiplying (22) and rounding (24) with another lifting matrix until all lifting matrices have been processed so as to obtain a rotated vector comprising an integer windowed sampled value from the quarter of the window and an integer windowed sampled value from another quarter of the window.

**23.** Apparatus for inverse processing of integer values having been generated by the apparatus in accordance with claim 22, comprising:

means for applying the rotated vector with a rotation matrix inverse to the rotation matrix, with the inverse rotation matrix being adjusted to be represented by a plurality of inverse lifting matrices, with one inverse lifting matrix only comprising one element depending on the window and being unequal to 1 or 0, with the means for applying comprising the following sub-features:

means for multiplying the rotated vector by an inverse lifting matrix being inverse to the lifting matrix which has been lastly used when generating the integer values so as to obtain a first inverse result vector;

means for rounding a component' of the first inverse result vector with the rounding function so as to obtain a rounded first inverse result vector; and

means for sequentially carrying out the multiplying and rounding with further lifting matrices in an order which is inverse with respect to the order when generating the integer values so as to obtain an inversely processed vector which includes an integer time-discrete sampled value from a quarter of the window and an integer time-discrete sampled value from another quarter of the window.

**Revendications**

**1.** Procédé de traitement de valeurs de balayage discrètes dans le temps représentant un signal audio, pour obtenir des valeurs à nombre entier, aux étapes suivantes consistant à :

diviser en fenêtres des valeurs de balayage discrètes dans le temps avec une fenêtre (w) d'une longueur correspondant à 2N valeurs de balayage discrètes dans le temps, pour créer des valeurs de balayage discrètes dans le temps divisées en fenêtres, en vue d'une conversion des valeurs de balayage discrètes dans le temps en une représentation spectrale au moyen d'une transformation pouvant générer, à partir de N valeurs d'entré, N valeurs de sortie, la division en fenêtres présentant les étapes partielles suivantes consistant à :

sélectionner (16) une valeur de balayage discrète dans le temps d'un quart de la fenêtre et une valeur de balayage discrète dans le temps d'un autre quart de la fenêtre, pour obtenir un vecteur de valeurs de balayage discrètes dans le temps ;
soumettre le vecteur à une matrice de rotation carrée dont la dimension coïncide avec la dimension du vecteur, la matrice de rotation pouvant être représentée par une pluralité de matrices d'élévation, une matrice d'élévation ne présentant qu'un seul élément qui dépend de la fenêtre (w) et qui est différent de 1 ou 0, l'étape partielle de soumission présentant les sous-étapes suivantes consistant à :

multiplier (18) le vecteur par une matrice d'élévation, pour obtenir un premier vecteur de résultat ;
arrondir (20) une composante du premier vecteur de résultat par une fonction d'arrondi (r) qui reproduit un nombre réel sur un nombre entier, pour obtenir un premier vecteur de résultat arrondi ; et
effectuer en séquence les étapes de multiplication (22) et d'arrondi (24) par une autre matrice d'élévation, jusqu'à ce que toutes les matrices d'élévation aient été traitées, pour obtenir un vecteur tourné présentant une valeur de balayage divisée en fenêtres à nombre entier du quart de la fenêtre et une valeur de balayage divisée en fenêtres à nombre entier de l'autre quart de la fenêtre.

**2.** Procédé selon la revendication 1, dans lequel les matrices d'élévation sont des matrices 2 x 2, et dans lequel sont présentes en tout trois matrices d'élévation par matrice de rotation.

**3.** Procédé selon la revendication 1 ou 2, dans lequel l'étape de multiplication du vecteur ou d'un vecteur de résultat arrondi est effectuée en formant des produits partiels et en additionnant les produits partiels, l'étape d'arrondi étant effectuée avec des produits partiels non à nombre entier avant que ne soit effectuée l'addition.

**4.** Procédé selon l'une des revendications précédentes, dans lequel la fenêtre présente un nombre 2N de valeurs de balayage qui est égal à une puissance de la base 2.

**5.** Procédé selon l'une des revendications précédentes, dans lequel la matrice de rotation est une matrice de rotation de Givens.

**6.** Procédé selon l'une des revendications précédentes, présentant, par ailleurs, l'étape suivante consistant à :

réaliser l'étape de division en fenêtres pour toutes les valeurs de balayage discrètes dans le temps des quarts restants de la fenêtre, pour obtenir 2N valeurs de balayage à nombre entier filtrées ; et

convertir (14) N valeurs de balayage à nombre entier divisées en fenêtres en une représentation spectrale par une DCT à nombre entier pour des valeurs aux valeurs de balayage à nombre entier filtrées du deuxième quart et du troisième quart de la fenêtre, pour obtenir N valeurs spectrales à nombre entier.

**7.** Procédé selon la revendication 6, dans lequel la DCT à nombre entier est une DCT présentant des fonctions de base asymétriques.

**8.** Procédé selon la revendication 7, dans lequel la DCT est une DCT du type IV.

**9.** Procédé selon l'une des revendications 6 à 8, dans laquelle la DCT peut être décomposée en matrices de rotation de Givens et celles-ci, à leur tour, en matrices d'élévation, après chaque multiplication par une matrice d'élévation suivant une étape d'arrondi.

**10.** Procédé selon l'une des revendications précédentes, dans lequel la matrice de rotation de Givens a la forme suivante :

$$\begin{pmatrix} \cos\alpha & -\sin\alpha \\ \sin\alpha & \cos\alpha \end{pmatrix}$$

dans lequel les matrices d'élévation ont la forme suivante :

$$\begin{pmatrix} 1 & \dfrac{\cos\alpha-1}{\sin\alpha} \\ 0 & 1 \end{pmatrix}\begin{pmatrix} 1 & 0 \\ \sin\alpha & 1 \end{pmatrix}\begin{pmatrix} 1 & \dfrac{\cos\alpha-1}{\sin\alpha} \\ 0 & 1 \end{pmatrix}$$

dans lequel l'angle $\alpha$ est défini comme suit :

$$\alpha = \arctan[w(N/2-1-k)/ w(N/2 + k) ]$$

k étant un indice de temps des valeurs de balayage discrètes dans le temps et allant de 0 à 2N-1 et w étant une fonction de division en fenêtres.

**11.** Procédé selon l'une des revendications précédentes, dans lequel est remplie pour la fonction de division en fenêtres w la condition suivante :

$$w(\frac{N}{2} + k)^2 + w(\frac{N}{2} - 1 - k)^2 = 1$$

12. Procédé selon la condition 11, dans lequel la fenêtre est une fenêtre sinusoïdale.

13. Procédé selon l'une des revendications précédentes, dans lequel les valeurs de balayage discrètes dans le temps sont à nombre entier.

14. Procédé selon la revendication 6, présentant, par ailleurs, l'étape suivante consistant à :

soumettre à un codage entropique les valeurs spectrales à nombre entier, pour obtenir une version codée de manière entropique du signal audio.

15. Procédé selon la revendication 6, présentant, par ailleurs, l'étape consistant à quantifier les valeurs spectrales à nombre entier en tenant compte du seuil de masquage psycho-acoustique, pour obtenir des valeurs spectrales quantifiées qui sont quantifiées de sorte que le bruit de quantification soit sensiblement masqué.

16. Procédé selon la revendication 6, présentant, par ailleurs, l'étape consistant à filtrer les valeurs spectrales à nombre entier sur la fréquence au moyen d'un prédicteur à boucle fermée et à arrondir les valeurs d'erreur de prédiction.

17. Procédé de traitement inverse de valeurs à nombre entier générées par le procédé selon la revendication 1, aux étapes suivantes consistant à :

soumettre le vecteur tourné à une matrice de rotation inverse à la matrice de rotation, la matrice de rotation inverse pouvant être représentée par une pluralité de matrices d'élévation inverse, une matrice d'élévation inverse ne présentant qu'un seul élément qui est fonction de là fenêtre et est différent de 1 ou 0, l'étape de soumission présentant les sous-étapes suivantes consistant à :

multiplier le vecteur tourné par une matrice d'élévation inverse qui est inverse à la matrice d'élévation qui a été utilisée en dernier lieu lors de la génération des valeurs à nombre entier, pour obtenir un premier vecteur de résultat inverse ;
arrondir une composante du premier vecteur de résultat inverse par la fonction d'arrondi, pour obtenir un premier vecteur de résultat inverse arrondi ; et
effectuer en séquence les étapes de multiplication et d'arrondi avec d'autres matrices d'élévation selon un ordre qui est inversé par rapport à l'ordre lors de la génération des valeurs à nombre entier, pour obtenir un vecteur traité inversement qui comporte une valeur de balayage discrète dans le temps à nombre entier d'un quart de la fenêtre et une valeur de balayage discrète dans le temps à nombre entier d'un autre quart de la fenêtre.

18. Procédé selon la revendication 17, dans lequel les valeurs à nombre entier sont générées par le procédé selon la revendication 2 et comportent des valeurs spectrales à nombre entier, et dans lequel est, par ailleurs, effectuée, avant l'étape de soumission du vecteur tourné, l'étape suivante consistant à :

convertir les valeurs spectrales à nombre entier, par une DCT à nombre entier inverse à la DCT à nombre entier lors de la génération, en une représentation dans le temps, pour obtenir le vecteur tourné.

19. Procédé selon la revendication 17 ou 18, dans lequel la fonction d'arrondi est symétrique à un point, et dans lequel les matrices d'élévation inverse sont identiques aux matrices d'élévation, toutefois à angle de rotation négatif.

20. Procédé selon la revendication 18, dans lequel la DCT à nombre entier est une DCT dérivée d'une DCT du type IV.

21. Procédé selon l'une des revendications 17 à 20, dans lequel les matrices d'élévation inverse sont identiques aux matrices d'élévation correspondantes, toutefois à l'exception d'éléments de diagonale auxiliaire qui, par rapport aux matrices d'élévation, sont négatifs dans les matrices d'élévation inverse.

22. Dispositif de traitement de valeurs de balayage discrètes dans le temps représentant un signal audio, pour obtenir des valeurs à nombre entier, aux caractéristiques suivantes :

un dispositif destiné à diviser en fenêtres les valeurs de balayage discrètes dans le temps avec une fenêtre (w) d'une longueur correspondant à 2N valeurs de balayage discrètes dans le temps, pour créer des valeurs de balayage discrètes dans le temps divisées en fenêtres, en vue d'une conversion des valeurs de balayage discrètes dans le temps en une représentation spectrale au moyen d'une transformation pouvant générer, à partir de N valeurs d'entrée, N valeurs de sortie, le dispositif destiné à diviser en fenêtres présentant les caractéristiques partielles suivantes :

un dispositif destiné à sélectionner (16) une valeur de balayage discrète dans le temps d'un quart de la fenêtre et une valeur de balayage discrète dans le temps d'un autre quart de la fenêtre, pour obtenir un vecteur de valeurs de balayage discrètes dans le temps ;

un dispositif destiné à soumettre le vecteur à une matrice de rotation carrée dont la dimension coïncide avec la dimension du vecteur, la matrice de rotation pouvant être représentée par une pluralité de matrices d'élévation, une matrice d'élévation ne présentant qu'un seul élément qui est fonction de la fenêtre (w) et qui est différent de 1 ou 0, le dispositif destiné à soumettre présentant les sous-caractéristiques suivantes :

un dispositif destiné à multiplier (18) le vecteur par une matrice d'élévation, pour obtenir un premier vecteur de résultat ;

un dispositif destiné à arrondir (20) une composante du premier vecteur de résultat par une fonction d'arrondi (r) qui reproduit un nombre réel sur un nombre entier, pour obtenir un premier vecteur de résultat arrondi ; et

un dispositif destiné à effectuer en séquence les étapes de multiplication (22) et d'arrondi (24) avec une autre matrice d'élévation, jusqu'à ce que soient traitées toutes les matrices d'élévation, pour obtenir un vecteur tourné comportant une valeur de balayage divisée en fenêtres à nombre entier du quart de la fenêtre et une valeur de balayage divisée en fenêtres à nombre entier de l'autre quart de la fenêtre.

23. Dispositif de traitement inverse de valeurs à nombre entier qui ont été générées par le dispositif selon la revendication 22, aux caractéristiques suivantes :

un dispositif destiné à soumettre le vecteur tourné à une matrice de rotation inverse à la matrice de rotation, la matrice de rotation inverse pouvant être représentée par une pluralité de matrices d'élévation inverse, une matrice d'élévation inverse ne présentant qu'un seul élément qui est fonction de la fenêtre et qui est différent de 1 ou 0, le dispositif destiné à soumettre présentant les caractéristiques partielles suivantes :

un dispositif destiné à multiplier le vecteur tourné par une matrice d'élévation inverse qui est inverse à la matrice d'élévation qui a été utilisée en dernier lieu lors de la génération des valeurs à nombre entier, pour obtenir un premier vecteur de résultat inverse ;

un dispositif destiné à arrondir une composante du premier vecteur de résultat inverse par la fonction d'arrondi, pour obtenir un premier vecteur de résultat inverse arrondi ; et

un dispositif destiné à effectuer en séquence la multiplication et l'arrondi avec d'autres matrices d'élévation selon un ordre qui est inversé par rapport à l'ordre lors de la génération des valeurs à nombre entier, pour obtenir un vecteur traité inversement qui comporte une valeur de balayage discrète dans le temps à nombre entier d'un quart de la fenêtre et une valeur de balayage discrète dans le temps à nombre entier d'un autre quart de la fenêtre.

FIG. 1

FIG. 2

FIG. 3

402

zeitdiskr. → | Fenstern mit Fensterlänge 2N | 402

408

| Fenstern mit Fensterlänge 2N | → 2N gefenst. AW → | MDCT | → N Spektralwerte (1. Fenster)

zeitdiskr.

AW

50 % Overlap 406

404

| Fenstern Länge 2N | → 2N gefenst. AW → | MDCT | → N Spektralwerte (2. Fenster)

410

## FIG. 4a

412

N SW 1. Fenster → | MDCT $^{-1}$ | → 2 N AW 1. Fenster

416

| $Y_1(N+k) + Y_2(k)$ | TDAC | → N AW

414

N SW 1. Fenster → | MDCT $^{-1}$ | → 2 N AW 2. Fenster

## FIG. 4b